# EUROPEAN PATENT APPLICATION

(11) **EP 4 653 362 A1**
(43) Date of publication of application: **26.11.2025**
(21) Application number: 24811405.0
(22) Date of filing: 22.05.2024
(51) Int. Cl.: B65H 29/32, H01M 10/04

(54) **OBJECT LOADING FACILITY**

(30) Priority: 24.05.2023 KR 20230067194; 20.05.2024 KR 20240065326
(71) Applicant: LG Energy Solution, Ltd., Seoul 07335 (KR)
(72) Inventor: JEONG, Do Hwan, Daejeon 34122 (KR); KEUM, Dong Yeon, Daejeon 34122 (KR); BAEK, Ju Hwan, Daejeon 34122 (KR); JO, Kwang Un, Daejeon 34122 (KR); LEE, Hee Moon, Daejeon 34122 (KR); KIM, Jung Won, Daejeon 34122 (KR)
(74) Representative: Goddar, Heinz J.
(86) International application number: PCT/KR2024/006938
(87) International publication number: WO 2024/242467

(57) **Abstract**

The present invention relates to an object loading facility including: a stator in which a plurality of rail are connected to provide a circular traveling path passing through an object supply position and an object falling position; and a loading part that is repeatedly circulated between the object supply position and the object falling position by an interaction with magnetic fields generated in the stator and is configured to adsorb the object disposed at the object supply position so that the object falls to a loading point of the object falling position and is loaded, wherein a first rail disposed at the loading point among the plurality of rails is provided to descend toward an object loading position so that the object adsorbed on the loading part disposed on the first rail is disposed to a preset distance with respect to the loading point.

## Description

### TECHNICAL FIELD

### CROSS-REFERENCE TO RELATED APPLICATION

The present application claims the benefit of the priority of Korean Patent Application Nos. 10-2023-0067194, filed on May 24, 2023, 10-2024-0065326, filed on May 20, 2024, which are hereby incorporated by reference in their entirety.

### TECHNICAL FIELD

The present invention relates to an object loading facility using a linear motor system (LMS). Particularly, the present invention relates to an object loading facility that prevents distortion from occurring when an object is loaded to improve stacking defects.

### BACKGROUND ART

In general, secondary batteries refer to chargeable and dischargeable batteries, unlike primary batteries that are impossible to be charged. The secondary batteries are being widely used in advanced electronic devices such as phones, laptop computers, and camcorders.

In addition, the secondary batteries may be classified in various manners depending on a structure of an electrode assembly. For example, secondary batteries may be classified into a stacked type structure, a wound type (jelly roll-type) structure, and a stacking/folding type structure.

The above-described secondary battery includes an electrode assembly, an electrolyte, and a case that accommodates the electrode assembly and the electrolyte. The electrode assembly includes one or more radical units, and each of the radical units has a structure in which a positive electrode and a negative electrode are alternately arranged with a separator therebetween.

A method for manufacturing a secondary battery having such a structure includes a process of manufacturing a radical unit, a process of transferring and loading the radical unit, a process of alternately disposing the radical unit and a separator to manufacture an electrode assembly, and a process of accommodating the electrode assembly to manufacture a secondary battery.

Here, in the process of loading the radical unit, a conveyor that transfers the radical unit and a loading box in which the radical unit falling from the conveyor is loaded are used.

However, the method for manufacturing the secondary battery according to has a problem in that the radical unit is loaded in a distorted state due to a height difference between a conveyor and a loading box to cause loading defects.

### DISCLOSURE OF THE INVENTION

### TECHNICAL PROBLEM

An object of the present invention is to provide an object loading facility, in which an object is transferred and loaded using a linear motor system (LMS), and which controls a falling height of the object to be minimized to prevent the object from being loaded in a distorted state, thereby preventing loading defects from occurring so as to improve the loading defects.

### TECHNICAL SOLUTION

An object loading facility of the present invention includes: a stator in which a plurality of rail are connected to provide a circular traveling path passing through an object supply position and an object falling position; and a loading part that is repeatedly circulated between the object supply position and the object falling position by an interaction with magnetic fields generated in the stator and is configured to adsorb the object disposed at the object supply position so that the object falls to a loading point of the object falling position and is loaded, wherein a first rail disposed at the loading point among the plurality of rails is provided to descend toward an object loading position so that the object adsorbed on the loading part disposed on the first rail is disposed to a preset distance with respect to the loading point.

The object loading facility may further include a first driving part configured to allow the first rail to descend toward the loading point or return to its original position.

The loading part may include: a mover installed on the stator and repeatedly circulated between the object supply position and the object falling position by the interaction with the magnetic fields generated in the stator; and a shuttle fixed to the mover and configured to adsorb the object disposed at the object supply position A and allow the object to fall to the loading point of the object falling position.

The shuttle may be coupled to be detachable from the mover.

The first driving part may be configured to allow the first rail to ascend to its original position when the object falls from the shuttle.

The first driving part may be provided as a cylinder configured to allow the first rail to vertically descend or ascend.

The cylinder may include a cylinder rod on which a coupling protrusion is disposed, and the first rail may include a bracket having a coupling groove into which the coupling protrusion of the cylinder rod is fitted to be coupled.

The stator may further include a base part on which the plurality of rails are supported.

The object loading facility may further include a detection sensor configured to detect whether the rail disposed at the loading point returns to its original position.

The object falling position may have a discharge point, and the loading part may be configured to allow the object to fall to the discharge point when the adsorbed object is defective at the object supply position.

The second rail disposed at the discharge point among the plurality of rails may be provided to descend toward the discharge point so that the defective object adsorbed on the loading part disposed on the second rail is disposed at a preset distance with respect to the discharge point.

The object loading facility may further include a second driving part configured to allow the second rail to descend toward the discharge point or return to its original position.

The first rail and a rail corresponding to the first rail may be provided to be spaced a predetermined distance from each other.

The preset distance may be 1.0 mm to 10.0 mm.

The object loading facility may further include a transfer device configured to supply the object to the supply position.

### ADVANTAGEOUS EFFECTS

The present invention may include the object loading facility, and thus, when the loading part is disposed on the first rail disposed at the loading point among the plurality of rails, the first rail may descend to reduce the falling height of the object adsorbed on the loading part with respect to the loading point, thereby preventing or minimizing the distortion when the object is loaded and thus improving the loading defects.

In addition, in the object loading facility of the present invention, the loading part may include the mover and the shuttle to improve the mobility and the adsorption and loading of the object. Particularly, the shuttle may be detachably coupled to the mover to improve the efficiency in maintenance.

In addition, in the object loading facility of the present invention, the first driving part may allow the first rail to return to its original position when the object falls from the shuttle, thereby improving the continuity of the process.

In addition, in the object loading facility of the present invention, the first driving part may include the cylinder so that the first rail vertically descends or return to its original position, thereby improving the process capacity.

In addition, in the object loading facility of the present invention, the cylinder rod of the cylinder and the first rail may have the structure in which the cylinder rod is fitted into the first rail, thereby improving the coupling.

In addition, in the object loading facility of the present invention, the loading device may further include the second driving part, and thus, when the loading part that adsorbs the defective object is disposed on the second rail disposed at the discharge point among the plurality of rails, the second rail may descend to reduce the falling height of the object adsorbed on the loading part with respect to the discharge point, thereby preventing the defective object from being loaded in the distorted state.

In addition, in the object loading facility of the present invention, the first rail and the rail corresponding to the first rail may be provided to be spaced the predetermined distance from each other, thereby preventing the collision and noise generation between the first rail and the corresponding rail.

### BRIEF DESCRIPTION OF THE DRAWINGS

FIG. 1 is a side view of an object loading facility according to a first embodiment of the present invention.
FIG. 2 is a side view illustrating a stator and a mover in the object loading facility according to the first embodiment of the present invention.
FIG. 3 is a view illustrating a loading part of the object loading facility according to the first embodiment of the present invention.
FIG. 4 is a schematic view illustrating an interaction between the stator and the mover of the object loading facility according to the first embodiment of the present invention.
FIG. 5 is a cross-sectional view illustrating a shuttle of the object loading facility according to the first embodiment of the present invention.
FIG. 6 is a view illustrating a first driving part of the object loading facility according to the first embodiment of the present invention.
FIG. 7 is a view illustrating a second driving part of the object loading facility according to the first embodiment of the present invention.
FIG. 8 is a side view of an object loading facility according to a second embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also like reference numerals in the drawings denote like elements.

### [Object loading facility according to first embodiment of the present invention]

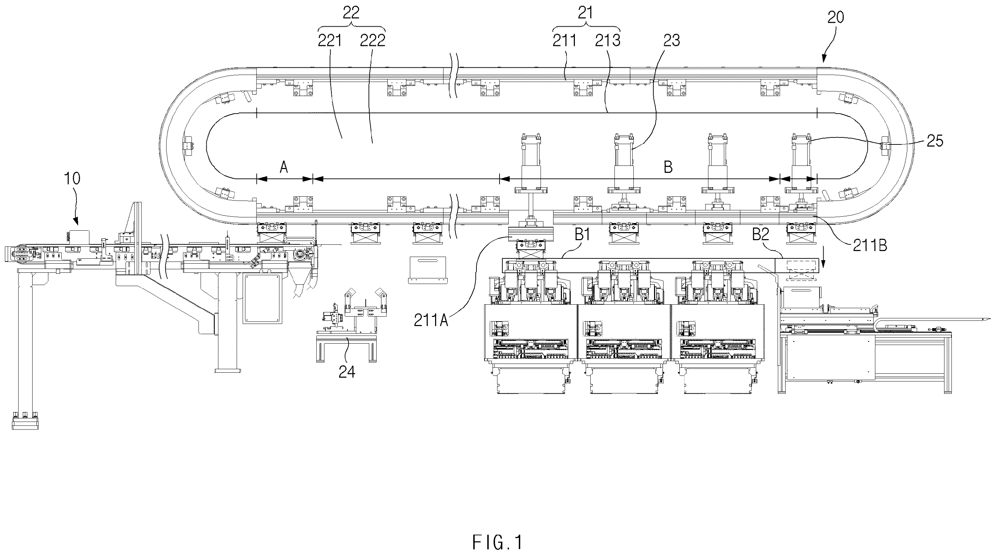

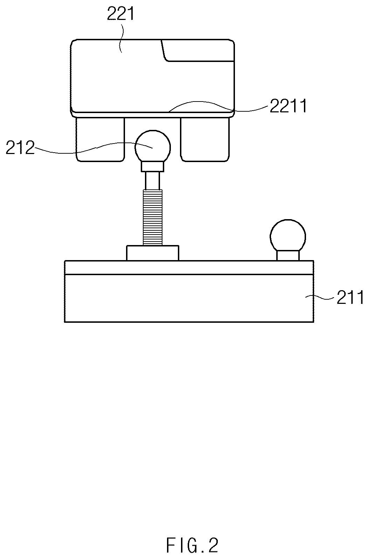

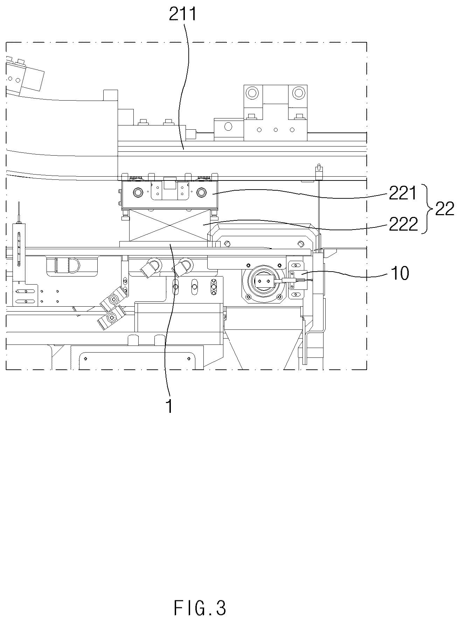

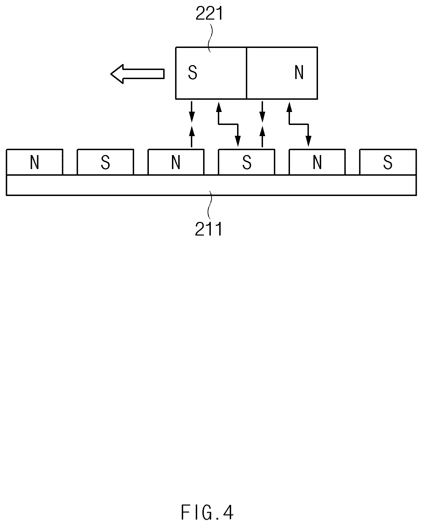

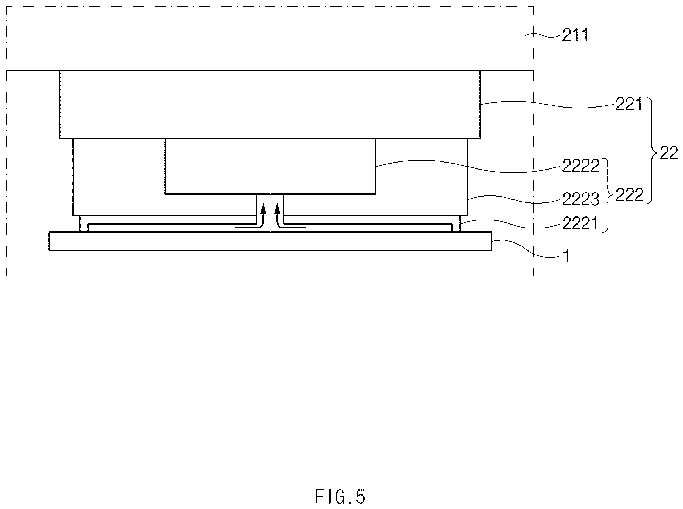

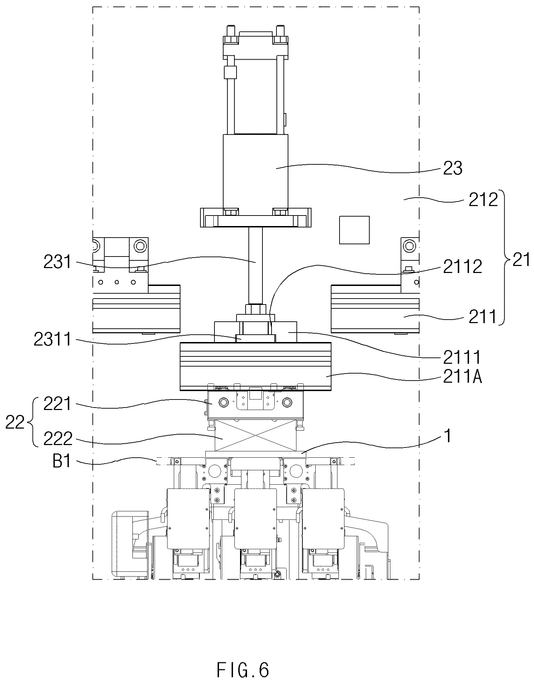

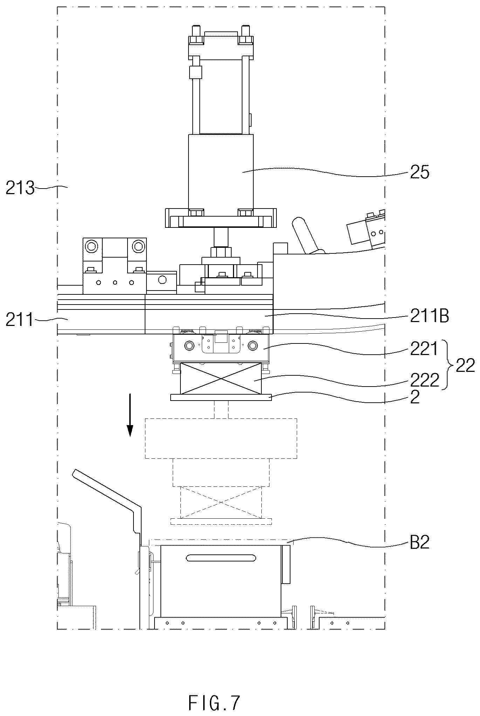

FIG. 1 is a side view of an object loading facility according to a first embodiment of the present invention, FIG. 2 is a side view illustrating a stator and a mover in the object loading facility according to the first embodiment of the present invention, FIG. 3 is a view illustrating a loading part of the object loading facility according to the first embodiment of the present invention, FIG. 4 is a schematic view illustrating an interaction between the stator and the mover of the object loading facility according to the first embodiment of the present invention, FIG. 5 is a cross-sectional view illustrating a shuttle of the object loading facility according to the first embodiment of the present invention, FIG. 6 is a view illustrating a first driving part of the object loading facility according to the first embodiment of the present invention, and FIG. 7 is a view illustrating a second driving part of the object loading facility according to the first embodiment of the present invention.

In an object loading facility according to a first embodiment of the present invention, a linear motor system (LMS) may be applied to minimize a vacuum loss by adsorbing each object 1, and each object 1 may be transferred to prevent defects such as distortion of the object 1 from occurring, and a transfer speed of each object 1 may be controlled to improve process efficiency.

Particularly, the object loading facility according to the first embodiment of the present invention may control a falling height of the object 1 with respect to a loading point when the object falls to the loading point, and thus, when the object 1 falls, defects such as distortion may be prevented from occurring.

Hereinafter, the object loading facility according to the first embodiment of the present invention will be described in detail with reference to the attached drawings.

As illustrated in FIG. 1, the object loading facility according to the first embodiment of the present invention includes a transfer device 10 that transfers the object 1 to an object supply position A, and a loading device 20 that adsorbs the object 1 disposed at the object supply position A to fall to an object falling position B, thereby loading the object 1.

### Transfer Device

As illustrated in FIG. 1, the transfer device 10 is configured to transfer the object 1 to the object supply position A. That is, the transfer device 10 is provided as a conveyor extending to the object supply position A.

### Loading Device

The loading device 20 is configured to allow the object 1 disposed at the object supply position A to fall to the object falling position B, thereby loading the object 1. That is, the loading device 20 includes a stator 21, a loading part 22, and a first driving part 23.

The stator 21 has a structure in which a plurality of rails 211 are connected to each other to provide a circular traveling path passing through the object supply position A and the object falling position B. Here, each of the rails 211 includes an electromagnet.

That is, the plurality of rails 211 have a structure connected in the form of the circular traveling path, such as a track in an athletics stadium.

The plurality of rails 211 include a first rail 211A disposed at a loading point B1 of the object falling position B, and a second rail disposed at a discharge point B2 of the object falling position B. Here, the first rail 211A and the second rail 211B are provided to be separable from the remaining rails. Thus, the first rail 211A and the second rail 211B may descend or ascend by a first driving part 23 and a second driving part 25.

The first rail 211A and the second rail 211B may be made of the same material as the remaining rails to improve ease of manufacturing.

As illustrated in FIG. 2, a plurality of rails 211 are provided in a direction of the circular traveling path and include an electromagnetic coil 212, which is an electromagnet. The electromagnetic coil 212 is provided with alternating N and S poles in the circular traveling path direction. In addition, the mover 221 corresponding to the rail 211 includes a magnetic 2211 provided with an N pole and an S pole. That is, the mover 221 is circulated along the rail 211 with driving force generated by a mutual operation between the electromagnetic coil 212 of the rail 211 and the magnetic 2211 of the mover 221. This uses a principle of a linear motor.

The stator 21 includes a first linear guide in which the rail 211 is connected in a straight line from a first point, which is the object supply position, to a second point, which is the object falling position, a second linear guide in which the rail 211 is connected in a curve from the second point to a third point, a third linear guide in which the rail 211 is connected in a straight line from the third point to a fourth point, and a fourth linear guide in which the rail 211 is connected in a curve from the fourth point to the first point. Thus, the mover 221 may be circulated while sequentially passing through the first to fourth linear guides of the stator 21. Here, the mover 22 may pass at a first speed when passing through the first linear guide, and the mover 22 may pass at a second speed that is faster than the first speed when passing through the second to fourth linear guides.

The stator 21 further includes a base part 213 that supports the plurality of rails 211 to provide the circular traveling path. That is, the base part 213 has the same shape as the track of the athletics stadium, and the plurality of rails 211 are supported on an outer circumferential surface to provide the circular traveling path. Here, the remaining rails except the first rail 211A and the second rail 211B are fixed to the base part 213 to increase in fixing force and support force.

As illustrated in FIG. 3, the loading part 22 is repeatedly circulated between the object supply position A and the object falling position B by the interaction with magnetic fields generated from the stator 21 and adsorbs the object 1 disposed at the object supply position A so that the object 1 falls to the loading point B1 of the object falling position B and then is loaded.

That is, the loading part 22 includes a mover 221 that is movably installed on the stator 21 and is repeatedly circulated between the object supply position A and the object falling position B by the interaction with the magnetic fields generated from the stator 21, and also, the mover 221 includes a magnetic 2211 provided with an N pole and an S pole.

As illustrated in FIG. 4, when current is applied to the electromagnetic coil 212 of the rail 211, the mover 221 generates electromagnetic force in the coil by the interaction with the magnetic fields generated from the stator 21. As a result, the mover 221 receives the driving force by the electromagnetic force, and thus, the mover 221 moves along the rail 211 of the stator 21. Here, if the current applied to the electronic coil 212 is large, the moving speed of the mover 221 increases, and if the current is small, the moving speed of the mover 221 decreases. As described above, the moving speed of the mover 221 may be adjusted.

The loading part 22 further include a shuttle 222 that is fixed to the mover 221 and adsorbs the object 1 disposed at the object supply position A to allows the object 1 to fall to the loading point B1 of the object falling position B.

As illustrated in FIG. 5, the shuttle 222 is configured to adsorb the object disposed at the object supply position A.

That is, the shuttle 222 includes an adsorption plate 2221 that adsorbs the object 1 with suction force, a suction machine 2222 that suctions air of the adsorption plate 2221 to generate the suction force, and a fixing member 2223 that fixes the adsorption plate 2221 to the mover 221.

The shuttle 222 may be detachably coupled to the mover 221. For example, the shuttle 222 and the mover 221 may be detachably coupled to each other through a coupling structure of a groove and a protrusion. Thus, compatibility may be improved by replacing the shuttle 222 coupled to the mover 221 according to the object 1.

When the shuttle 222 arrives at the loading point B1 of the object falling position B, the adsorbed object falls, and thus, the object 1 is sequentially loaded at the loading point B1. Here, there is a problem in that the object 1 is loaded in a distorted state due to a height difference between the shuttle 222 and the loading point B1.

The present invention includes a first driving part 23 that controls a height between the shuttle 222 and the loading point B1 to solve the above problems. The first driving part 23 controls the height between the object 1 adsorbed on the shuttle 222 and the loading point B1 so that the height is minimized, to prevent the object 1 from being loaded in the distorted state, thereby preventing the loading defects from occurring.

That is, as illustrated in FIG. 6, the first driving part 23 allows the first rail 211A to descend toward a loading box 30 disposed at the loading point B1 when the loading part 22 is disposed on the first rail 211A disposed at the loading point B1 among the plurality of rails 211 to control a falling height of the object 1 adsorbed on the loading part 22 with respect to the loading point B1. That is to say, the falling height may be reduced so that the object 1 adsorbed on the loading part 22 approaches the loading point B1.

Thus, the first driving part 23 may allow the object 1 to fall in a state in which the object adsorbed on the shuttle 222 is disposed as close as possible to the loading box 30 disposed at the loading point B1 and prevent the object 1 from being loading in the distorted state, thereby preventing the loading defects from occurring.

The first driving part 23 may allow the first rail 211A to ascend to the original position when the object falls from the shuttle 222. Thus, the first rail 211A returns to its original position and then is circulated along the stator 21 to the object supply position A.

The first driving part 23 may include a cylinder, through which the first rail 211A vertically descends or ascends, and thus, the first rail 211A may vertically descend or ascend to improve operability. The cylinder may be a hydraulic or pneumatic cylinder.

The cylinder may include a cylinder rod 231 on which a coupling protrusion 2311 is disposed, and the first rail 211A may include a bracket 2111 in which a coupling groove 2112 into which the coupling protrusion 2311 of the cylinder rod 231 is fitted to be coupled is defined. That is, the coupling protrusion 2311 of the cylinder rod 231 is fitted into the coupling groove 2112 of the bracket 2111 to firmly couple the cylinder to the first rail 211A.

The first rail 211A and the corresponding rail 211 are provided to be spaced a preset distance from each other. Here, the preset distance may be 1.0 mm to 10.0 mm. Thus, even if the first rail 211A descends or ascends, an accident in which the rails collide each other may be prevented from occurring. Here, when the preset distance is 1.0 mm or less, there is a problem in which the first rail and the rail, which correspond to each other, may collide with each other due to vibration occurring during the operation of the object loading facility, and when the preset distance is 10.0 mm or more, while the loading part passes between the first rail and the rail, which correspond to each other, "clunking" noise may occur.

The first driving part 23 allows the object 1 adsorbed on the loading part 22 to descend along the first rail 211A from the loading point B1 to a point of 1 mm to 100 mm.

Referring to FIG. 1, the loading device 20 further include an inspection part 24 provided between the object supply position A and the object falling position B to inspect whether the object 1 adsorbed on the loading part 22 is defective. For example, if the object 1 is a basic unit, the inspection part 24 photographs the basic unit adsorbed on the loading part 22 and then compares images of an electrode tab, an electrode, and a separator in the photographed image with preset images to inspect whether the object 1 is defective. The inspection part 24 may be a vision inspection device.

Here, if it is determined to be normal by the inspection part 24, the object 1 adsorbed on the loading part 22 falls to the loading point B1 of the falling point and then is loaded. If it is determined to be defective, the loading part 22 on which the defective object 1 is adsorbed falls to the discharge point B2 of the object falling position B and then is loaded.

The loading device 20 further include a second driving part 25 that controls a falling height of the defective object adsorbed on the loading part 22 with respect to the discharge point B2 to prevent the loading defects of the object 1 loaded at the discharge point B2 from occurring.

That is, as illustrated in FIG. 7, the second driving part 25 allows the second rail 211B to descend toward the loading box 40 disposed at the discharge point B2 when the loading part 22, on which a defective object 2 is adsorbed, is disposed on the second rail 211B disposed at the discharge point B2 among the plurality of rails 211, to control a falling height of the defective object 1 adsorbed on the loading part 22 with respect to the loading box 40 disposed at the discharge point B2. That is to say, the falling height may be reduced so that the defective object 2 adsorbed on the loading part 22 approaches the discharge point B2. Thus, the falling height of the defective object adsorbed on the loading part 22 may be minimized to prevent the defective object from being loaded in the distorted state, and as a result, the loading defects may be prevented. Here, the discharge point B2 is provided with a collection box in which the defective objects 2 are sequentially loaded.

In the present invention, each of the first and second driving parts is described to be limited to the cylinder, but any configuration that allows the rail to ascend and descend may be applied. For example, the first and second driving parts may be configured using a servomotor, a ball screw, etc.

Thus, the object loading facility according to the first embodiment of the present invention may prevent the object 1 from being loaded in the distorted state by controlling the falling height of the object 1 falling at the loading point B1, and as a result, the loading defects may be prevented.

Hereinafter, in descriptions of another embodiment of the present invention, constituents having the same function as the above-mentioned embodiment have been given the same reference numeral in the drawings, and thus duplicated description will be omitted.

### [Object loading facility according to second embodiment of the present invention]

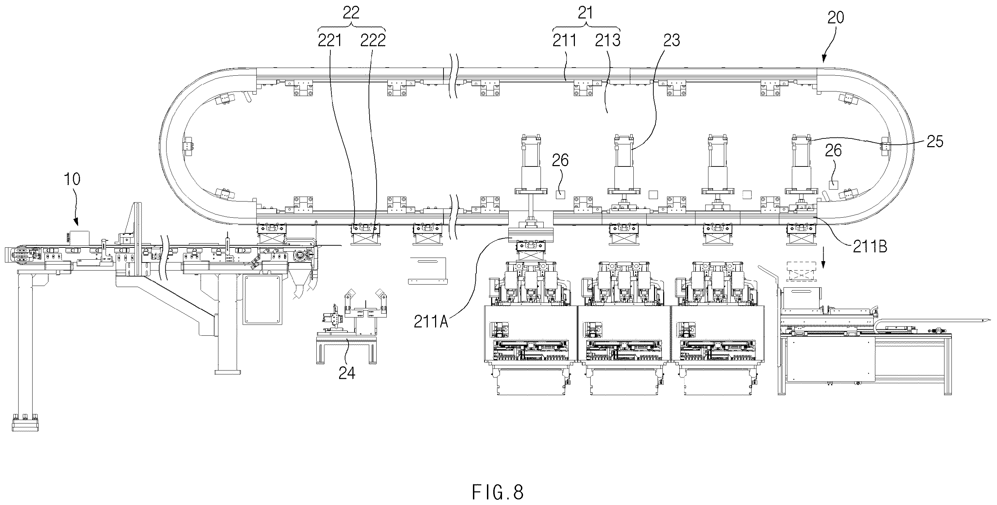

As illustrated in FIG. 8, an object loading facility according to a second embodiment of the present invention includes a transfer device 10 and a loading device 20.

Here, the transfer device 10 and the loading device 20 have the same configuration as the transfer device and the loading device 20 described above, and thus, duplicated descriptions will be omitted.

The loading device 20 further includes a detection sensor 26 that detects whether a first rail 211A disposed at a loading point B1 return to its original position. When the detection sensor 26 detects that the first rail 211A is in its original position, a signal is transmitted to a stator 21, and when the stator 21 receives the signal from the detection sensor 26, a loading part 22 disposed at the loading position B1 is circulated along the stator 21.

The loading device 20 further includes a detection sensor 26 that detects whether a second rail 211B disposed at a discharge point B2 return to its original position. When the detection sensor 26 detects that the second rail 211B is in its original position, a signal is transmitted to the stator 21, and when the stator 21 receives the signal from the detection sensor 26, the loading part 22 disposed at the discharge position B2 is circulated along the stator 21.

Therefore, the object loading facility according to the second embodiment of the present invention may include the detection sensor 26 to improve stability of the process.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

1: Object
2: Defective object
10: Transfer device
20: Loading device
21: Stator
211: Rail
211A: First rail
2111: Bracket
2112: Coupling groove
211B: Second rail
212: Electromagnetic coil
213: Base part
22: Loading part
221: Mover
2211: Magnetic
222: Shuttle
2221: Adsorption plate
2222: Suction machine
2223: Fixing member
23: First driving part
231: Cylinder rod
2311: Coupling protrusion
24: Inspection part
25: Second driving part
26: Detection sensor
30, 40: Loading box
A: Object supply position
B: Object falling position
B1: Loading point
B2: Discharge point

## Claims

1. An object loading facility comprises:
a stator in which a plurality of rail are connected to provide a circular traveling path passing through an object supply position and an object falling position; and
a loading part that is repeatedly circulated between the object supply position and the object falling position by an interaction with magnetic fields generated in the stator and is configured to adsorb the object disposed at the object supply position so that the object falls to a loading point of the object falling position and is loaded,
wherein a first rail disposed at the loading point among the plurality of rails is provided to descend toward an object loading position so that the object adsorbed on the loading part disposed on the first rail is disposed to a preset distance with respect to the loading point.

2. The object loading facility of claim 1, further comprising a first driving part configured to allow the first rail to descend toward the loading point or return to its original position.

3. The object loading facility of claim 2, wherein the loading part comprises:
a mover installed on the stator and repeatedly circulated between the object supply position and the object falling position by the interaction with the magnetic fields generated in the stator; and
a shuttle fixed to the mover and configured to adsorb the object disposed at the object supply position A and allow the object to fall to the loading point of the object falling position.

4. The object loading facility of claim 3, wherein the shuttle is coupled to be detachable from the mover.

5. The object loading facility of claim 3, wherein the first driving part is configured to allow the first rail to ascend to its original position when the object falls from the shuttle.

6. The object loading facility of claim 2, wherein the first driving part is provided as a cylinder configured to allow the first rail to vertically descend or ascend.

7. The object loading facility of claim 6, wherein the cylinder comprises a cylinder rod on which a coupling protrusion is disposed, and
the first rail comprises a bracket having a coupling groove into which the coupling protrusion of the cylinder rod is fitted to be coupled.

8. The object loading facility of claim 1, wherein the stator further comprises a base part on which the plurality of rails are supported.

9. The object loading facility of claim 1, further comprising a detection sensor configured to detect whether the rail disposed at the loading point returns to its original position.

10. The object loading facility of claim 1, wherein the object falling position has a discharge point, and
the loading part is configured to allow the object to fall to the discharge point when the adsorbed object is defective at the object supply position.

11. The object loading facility of claim 10, wherein the second rail disposed at the discharge point among the plurality of rails is provided to descend toward the discharge point so that the defective object adsorbed on the loading part disposed on the second rail is disposed at a preset distance with respect to the discharge point.

12. The object loading facility of claim 11, further comprising a second driving part configured to allow the second rail to descend toward the discharge point or return to its original position.

13. The object loading facility of claim 1, wherein the first rail and a rail corresponding to the first rail are provided to be spaced a predetermined distance from each other.

14. The object loading facility of claim 13, wherein the preset distance is 1.0 mm to 10.0 mm.

15. The object loading facility of claim 1, further comprising a transfer device configured to supply the object to the supply position.
